# EUROPEAN PATENT APPLICATION

(11) **EP 4 413 893 A1**
(43) Date of publication of application: **14.08.2024**
(21) Application number: 24156256.0
(22) Date of filing: 07.02.2024
(51) Int. Cl.: A43B 1/00, A43B 1/14, A43B 13/04, A43B 21/20, C08G 69/40, C08G 69/44, C08J 9/40

(54) **DYEING OF MOLDED SHOE COMPONENTS**

(30) Priority: 07.02.2023 US 202363443911 P
(71) Applicant: Allbirds, Inc., San Francisco, CA 94111 (US)
(72) Inventor: PATEL, Romesh, San Francisco, 94111 (US); HENRICHOT, Olivier, San Francisco, 94111 (US); ROMERO, James, San Francisco, 94111 (US)
(74) Representative: Rooney, John-Paul

(57) **Abstract**

Methods for dyeing molded shoe components, such as molded foam shoe components, are disclosed. Some of the methods include an operation of providing a dyebath derived from a prior dyeing process, such as a textile dyeing process. Dyed molded shoe components and shoes including these shoe components are also disclosed.

## Description

### FIELD

The described embodiments relate generally to dyeing of molded shoe components. More particularly, the present embodiments relate to methods for dyeing molded shoe components and also to dyed molded shoe components and shoes including these shoe components.

### BACKGROUND

Some traditional foam soles for shoes are dyed by incorporating a pigment or dye into a polymer material that is then foamed. However, in some cases the presence of the pigment or dye in the polymer material can affect the structure of the foam produced by the foaming operation.

### SUMMARY

The present embodiments relate to methods for dyeing molded shoe components, such as molded foam shoe components. In some implementations, the methods include an operation of providing a dyebath derived from a prior dyeing process and an operation of immersing the molded shoe component in the dyebath. Dyed molded shoe components and shoes including these shoe components are also provided.

The methods described herein can provide more sustainable methods for dyeing molded polymer components than some traditional dyeing methods. When the dyebath used to dye the molded shoe component is derived from a prior dyeing process, such as a textile dyeing process, the overall amount of waste fluids can be reduced as compared to the amount of waste fluids that would have been generated using two separate dyebaths (different dyebaths for the two dyeing processes).

The manufacturing processes described herein in which molded shoe components are colored by dyeing after molding can have several advantages over some conventional processes in which the shoe components are formed from a melt including a coloring agent. For example, when conventional coloring agents included in the melt tend to collapse the foam structure of the molded shoe component, the dyed molded foam shoe components described herein can have an internal foam structure that is more uniform and/or has greater porosity than the internal foam structure of these conventionally colored molded shoe components. In addition, manufacturing processes in which molded shoe components are dyed after molding can eliminate the need to clean the molding equipment between molding operations for differently colored shoe components in order to prevent color transfer.

The present embodiments also relate to dyed molded shoe components. In some implementations, the molded shoe component is a molded foam shoe component, such as a molded foam midsole component. In some embodiments, the molded foam shoe component has a "skin" structure at the surface of the part as described in more detail below. In some implementations, the molded shoe component may be dense rather than a porous foam. For example, dense molded shoe components may be used as heel counters, sole plates, or the like. The molded shoe component may include or be formed from a thermoplastic polymer material, such as a bio-based thermoplastic polymer material.

Bio-based molded shoe components and shoes including these bio-based molded shoe components can have reduced environmental impacts as compared to some conventional shoe components. For example, the environmental impact of the molded shoe components and the shoes including these components can be reduced when at least some of the polymer materials used to make the molded shoe components are bio-based. The bio-based polymer material may be derived from one or more renewable resources, such one or more plant sources.

The disclosure provides a method comprising providing a dyebath derived from a prior dyeing process, at least partially immersing a molded shoe component in the dyebath to dye at least a portion of the molded shoe component, removing the molded shoe component from the dyebath, and removing excess dye from the molded shoe component after removing the molded shoe component from the dyebath.

The disclosure also provides a molded foam shoe component comprising a core region having a first average porosity level, a surface region extending along a surface of the molded foam shoe component and having a second average porosity level that is less than the first average porosity level, and a dyed portion that extends from the surface and through at least a portion of the surface region.

The disclosure also provides a shoe comprising an upper portion and a sole attached to the upper portion and comprising a molded foam shoe component including a dyed portion.

### BRIEF DESCRIPTION OF THE DRAWINGS

The disclosure will be readily understood by the following detailed description in conjunction with the accompanying drawings, wherein like reference numerals designate like elements.
FIG. 1 shows an example of a molded shoe component.
FIG. 2 shows an example partial cross-sectional view of a molded foam shoe component.
FIG. 3 shows an example magnified cross-sectional view of a molded foam shoe component.
FIG. 4 shows another example of a molded shoe component.
FIG. 5 shows an example of a shoe including a molded shoe component.
FIG. 6 shows an example of a flow diagram of a method for dyeing a molded shoe component.

The use of cross-hatching or shading in the accompanying figures is generally provided to clarify the boundaries between adjacent elements and also to facilitate legibility of the figures. Accordingly, neither the presence nor the absence of cross-hatching or shading conveys or indicates any preference or requirement for particular materials, material properties, element proportions, element dimensions, commonalities of similarly illustrated elements, or any other characteristic, attribute, or property for any element illustrated in the accompanying figures.

Additionally, it should be understood that the proportions and dimensions (either relative or absolute) of the various features and elements (and collections and groupings thereof) and the boundaries, separations, and positional relationships presented therebetween, are provided in the accompanying figures merely to facilitate an understanding of the various embodiments described herein and, accordingly, may not necessarily be presented or illustrated to scale, and are not intended to indicate any preference or requirement for an illustrated embodiment to the exclusion of embodiments described with reference thereto.

### DETAILED DESCRIPTION

Reference will now be made in detail to representative embodiments illustrated in the accompanying drawings. It should be understood that the following descriptions are not intended to limit the embodiments to one preferred implementation. To the contrary, the described embodiments are intended to cover alternatives, modifications, and equivalents as can be included within the spirit and scope of the disclosure and as defined by the appended claims.

The present embodiments relate to methods for dyeing molded shoe components, such as molded foam shoe components. In some implementations, the methods include an operation of providing a dyebath derived from a prior dyeing process and an operation of immersing the molded shoe component in the dyebath. Dyed molded shoe components and shoes including these shoe components are also provided.

The methods described herein can provide more sustainable methods for dyeing molded polymer components than some traditional dyeing methods. When the dyebath used to dye the molded shoe component is derived from a prior dyeing process, such as a textile dyeing process, the overall amount of waste fluids can be reduced as compared to the amount of waste fluids that would have been generated using two different dyebaths for the two dyeing processes. In some cases, the dyebath includes a disperse dye.

The manufacturing processes described herein in which molded shoe components are colored by dyeing after molding can have several advantages over some conventional processes in which the shoe components are formed from a melt including a coloring agent. For example, when conventional coloring agents included in the melt tend to collapse the foam structure of the molded shoe component, the dyed molded shoe components described herein can have an internal foam structure that is more uniform and/or has greater porosity than the internal foam structure of these conventionally colored molded shoe components. In addition, manufacturing processes in which molded shoe components are dyed after molding can eliminate the need to clean the molding equipment between molding operations for differently colored shoe components in order to prevent color transfer.

The present embodiments also relate to dyed molded shoe components. In some implementations, the molded shoe component is a molded foam shoe component, such as a molded foam midsole component. In some implementations, the molded shoe component may be dense rather than a porous foam. For example, dense molded shoe components may be used as heel counters, sole plates, or the like. The molded shoe component may include or be formed from a thermoplastic polymer material, such as a bio-based thermoplastic elastomer material.

Bio-based molded shoe components and shoes including these bio-based molded shoe components can have reduced environmental impacts as compared to some conventional shoe components. For example, the environmental impact of the molded shoe components and the shoes including these components can be reduced when at least some of the polymer materials used to make the molded shoe components are bio-based. The bio-based polymer material may be derived from one or more renewable resources, such one or more plant sources.

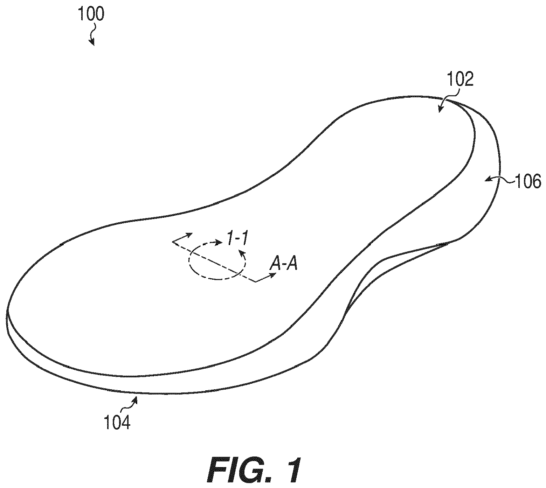

These and other embodiments are discussed below with reference to FIGs. 1 - 6. However, those skilled in the art will readily appreciate that the detailed description given herein with respect to these figures is for explanatory purposes only and should not be construed as limiting.

FIG. 1 shows an example of a molded shoe component. In some embodiments, the molded shoe component 100 of FIG. 1 is a molded foam sole component. The molded shoe component 100 may be at least partially dyed, as described in more detail below.

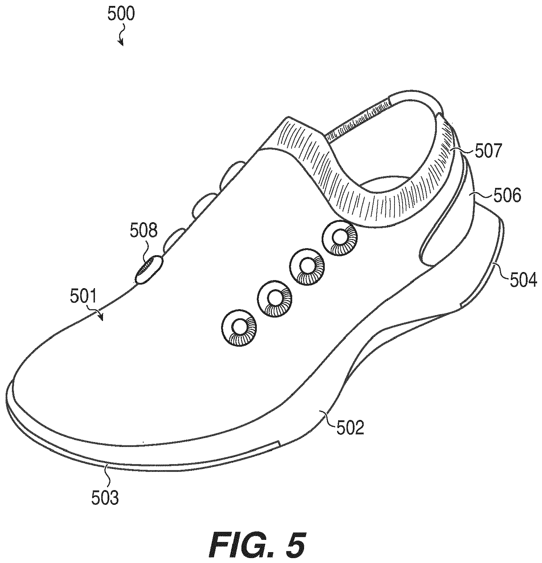

As shown in FIG. 1, the molded shoe component 100 has an upper surface 102, a lower surface 104, and a side surface 106. In some cases, the molded shoe component 100 may form the sole of the shoe. In other cases, the sole of the shoe may include other components in addition to the molded shoe component 100. For example, the shoe may include an outsole attached to the lower surface 104 of the molded shoe component 100, and the molded shoe component 100 may be a midsole component, as shown in the example of FIG. 5. The upper surface 102 of the molded shoe component 100 may be attached to an upper portion of the shoe, as shown in the example of FIG. 5.

In some embodiments, the molded shoe component 100 is formed from a thermoplastic polymer material, such as a thermoplastic elastomer. The thermoplastic elastomer may be a block copolymer such as a thermoplastic polyamide elastomer (e.g., a polyether-block-amide (PEBA) block copolymer) or a thermoplastic polyurethane elastomer (TPU). In some cases, the molded shoe component is formed from a bio-based thermoplastic polymer material. As examples, the bio-based thermoplastic polymer material may be based at least in part on a bio-based polyamide, a bio-based polyol, a bio-based polyolefin or another bio-based component. One or more of these bio-based components may be derived from a plant source. One example of a bio-based polyamide derived from a plant-based source is nylon 11, also referred to as polyamide 11, which can be produced from castor beans.

One measure of the environmental impact of a product is the carbon footprint for the product, which can be characterized by the carbon dioxide equivalent (CO2e). The bio-based carbon content is determined from the ratio of "new" organic carbon (e.g., plant or agricultural-based carbon) to the total organic carbon in the product. The amount of bio-based carbon in the molded shoe component (or another portion of the shoe) may be determined using a method such as those described in ASTM D6866, ISO 16620-2, and CEN 16640. In some cases, the molded shoe component may be referred to as "bio-based" when it has a bio-based carbon content greater than 20%, greater than 25%, greater than 30%, greater than 40%, greater than 50%, or within a range from 25% to 100%, from 50% to 100%, from 70% to 100%, or from 80% to 100%.

In embodiments, the molded shoe component 100 is a molded foam shoe component. In some cases, the molded foam shoe component includes or is formed from a thermoplastic foam. The thermoplastic foam may be formed from a thermoplastic polymer material. As referred to herein, a thermoplastic foam or a molded foam shoe component formed from a thermoplastic polymer material may also include a foaming agent within closed cells of the foam. The thermoplastic foam may be physically foamed rather than chemically foamed. If crosslinks are present in the thermoplastic foam, a majority of these crosslinks may be reversible upon heating to facilitate later recycling of the molded foam shoe component.

The molded shoe component may be molded by any of a variety of processes. In some cases, the molded shoe component is injected molded or compression molded. In some examples, a foam shoe component is injection molded by a process in which the structure of the foam is developed in the mold. The temperature of the mold may be controlled appropriately to obtain the desired surface qualities of the part. Typically, the temperature of the mold is cooler than the temperature of the melt entering the mold during at least part of the injection process. An injection molded foam shoe component may have a "skin layer" as described in more detail below. A molded foam shoe component may also be compression molded. In some cases, a compression molded foam shoe component may have a skin layer.

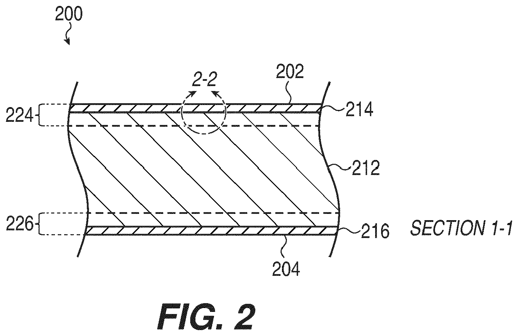

In some embodiments, the molded foam shoe component comprises a core region and a surface region extending along at least a portion of a surface of the molded foam shoe component. This surface region may alternately be referred to as a "skin layer." The core region may have a first average porosity level and the surface region may have a second average porosity level that is less than the first average porosity level. In some cases, the molded foam shoe component has a dyed portion that extends from the surface and through at least a portion of the surface region, an example of which is shown in FIG. 2.

FIG. 2 shows an example partial cross-sectional view of a molded foam shoe component 200. The view of FIG. 2 may be an example of a cross-sectional view along A-A in detail area 1-1 of FIG. 1. The detail area 1-1 extends through a thickness of the molded foam shoe component 200 and therefore a portion of both the upper surface 202 and the lower surface 204 are shown in FIG. 2. The molded foam shoe component 200 includes an upper surface region 214, a core region 212, and a lower surface region 216. The core region 212 is typically porous and in some cases may have a closed cell foam structure. The core region 212 may be characterized by a first porosity level, such as a first volume percentage of pores, or by a first density. The first porosity level may be a first average porosity level.

The upper surface region 214 extends along the upper surface 202 and the lower surface region 216 extends along the lower surface 204. The upper surface region 214 and the lower surface region 216 may alternately be referred to herein as "skin layers." Typically, skin layers have a lower porosity level than the core region. The skin layers may have a second porosity level (e.g., a second average porosity level) that is less than the first porosity level. However, in some cases each of the upper surface region 214 and the lower surface region 216 may be at least partially foamed and the foam structure in these regions may include some open cells. For example, each of the upper surface region 214 and the lower surface region 216 may include pores which open to the surfaces 202 and 204. Pores that open to the surface of the molded foam shoe component can facilitate uptake of dye by the molded foam shoe component 200 during the dyeing process. The molded foam shoe component 200 may also include a surface region along the side surface of the molded shoe component. This surface region may be similar in structure to the upper surface region 214 and the lower surface region 216. When the molded foam shoe component 200 defines a portion of a sole of the shoe, this side surface may define a side surface of the sole.

FIG. 2 also shows dyed regions 224 and 226 of the molded foam shoe component 200. The boundaries of the dyed regions 224 and 226 within the molded foam shoe component are indicated with dashed lines. In the example of FIG. 2, the dyed region 224 extends through the surface region 214 and into the core region 212. Similarly, the dyed region 226 extends through the surface region 216 and into the core region 212. However, the dyed regions 224 and 226 do not extend completely through the core region 212. The example of FIG. 2 is not intended to be limiting and in additional examples the dyed regions 224 and 226 may be contained within the surface regions 214 and 216 or may extend deeper into the core region 212. In some embodiments, the molded foam shoe component has a thickness greater than or equal to 1.5 mm and the depth of the dyed regions may range from 0.25 mm to 0.75 mm. In these embodiments, the molded form shoe component may have a thickness less than or equal to 5 mm.

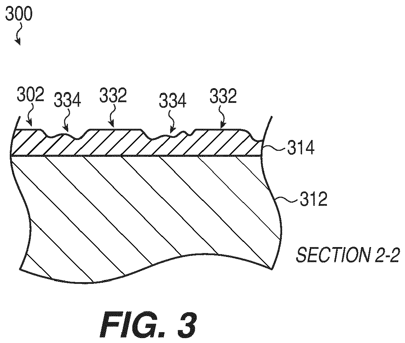

FIG. 3 shows an example magnified cross-sectional view of a molded foam shoe component 300. The view of FIG. 3 may be an example of an enlarged view of detail area 2-2 of the molded foam shoe component 200 of FIG. 2. The molded foam shoe component 300 includes a surface region 314 that extends along the surface 302 and a core region 312. In the example of FIG. 3, the surface 302 may be an upper surface of the molded foam shoe component and the surface region 314 may be an upper surface region. Alternately or additionally, the surface 302 may be a side surface and/or a lower surface of the molded foam shoe component 300.

As shown in FIG. 3, the surface region 314 is textured and the surface region 314 includes surface features 332 that at least partially define the surface 302. In the example of FIG. 3, the surface features 332 form high points of the surface 302. Adjacent portions 334 of the surface region 314 may form low points of the surface 302. The texture of the surface region 314 can provide visual contrast to the surface 302 of the molded shoe component 300. In some embodiments, the texture of all or part of the upper surface, the side surface and/or the bottom surface of the molded foam shoe component 300 may be similar to the texture described with respect to the surface 302.

In the example of FIG. 3, the surface features 332 define generally flat portions of the surface 302 and the adjacent portions 334 of the surface define rougher portions of the surface 302. In some examples, at least some of the surface features 332, when viewed from above, may be generally elongated in shape and may therefore be referred to herein as elongated surface features. These elongated surface features may be aligned with with flow of the material during the process of molding the shoe component. In some examples, at least some of the adjacent portions 334 of the surface 302 may be at least partially foamed and define a cellular structure. The cellular structure may include open cells. For example, the adjacent portions 334 of the surface 302 may be defined at least in part by pores that open to the surface 302.

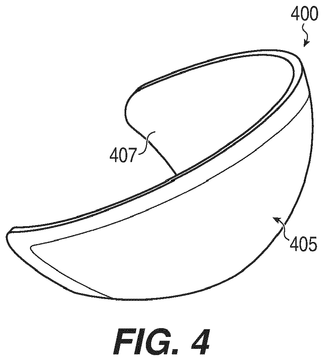

FIG. 4 shows another example of a molded shoe component. The molded shoe component 400 has an exterior surface 405 and an interior surface 407. The molded shoe component 400 shown in FIG. 4 may be a heel counter for a shoe. The molded shoe component of FIG. 4 may be denser than the molded foam components described with respect to FIGs. 1-3, but may have surface properties that are suitable for dyeing of the molded component. The example shown in FIG. 4 is not intended to be limiting and in other examples the molded shoe component may be a sole plate or another suitable component for a shoe.

The heel counter 400 may at least partially surround a heel of a wearer and therefore provide improved foot stability to a rear of a wearer's foot (e.g., by stabilizing the heel and holding it in place within the shoe). The heel counter 400 may have a higher density than a foam sole component of the shoe in order to provide the desired level of stability, while still having a low enough density so that undue weight is not added to the shoe. In some cases, the molded shoe component is formed from a thermoplastic polymer material. The thermoplastic polymer material may be any of the thermoplastic polymer materials previously described with respect to FIG. 1.

FIG. 5 shows an example of a shoe including a molded shoe component. The shoe 500 includes a midsole 502, which may be a molded foam shoe component as previously described. For example, the midsole 502 may have a composition and properties that are similar to those previously described with respect to the molded foam shoe components 100, 200, and 300 of FIGs. 1-3, and that description is not repeated here.

The shoe 500 also includes an upper portion 501 that is attached to the midsole. In some embodiments, the upper portion 501 may be formed wholly or in part from a knit textile. The knit textile may be a continuous textile and, in some cases, may define multiple regions with different textile properties. Examples of these textile properties may include breathability, amount of stretch, yarn composition, knit pattern, and the like. In some embodiments, the upper portion may be formed at least in part from a woven textile. In some cases, the textile may be formed using one or more types of yarn. The yarn may be formed from one or more natural or synthetic fibers twisted or otherwise bound together. Examples of fibers that may be used in the yarn include wool, silk, cotton, linen, hemp, and regenerated cellulose fibers such as lyocell fibers, polyester, nylon, and the like. Regenerated cellulose fibers can be made from sources like eucalyptus, bamboo, and birch trees. In some cases, some or all of any synthetic fibers included in the yarn are recycled synthetic fibers, such as recycled polyester, recycled nylon, or the like. In embodiments, the shoe includes a bio-based textile that includes bio-based fibers in the yarns used to form the textile.

The upper portion 501 of FIG. 5 includes a collar 507 that defines an opening to a cavity of the shoe 500. In the example of FIG. 5, eyelets 508 are attached to the upper portion and a lace (not shown) may be threaded through the eyelets 508 to help secure the shoe to a wearer. However, in other examples the shoe may not include eyelets.

The shoe 500 also includes a heel counter 506, which may be attached to an exterior surface of the upper portion 501 using an adhesive. In some cases, the heel counter 506 is a molded shoe component as previously described. For example, the heel counter 506 may have a composition and properties that are similar to these previously described with respect to the molded shoe component 400 of FIG. 4, and that description is not repeated here.

The shoe 500 also includes outsole portions 503 and 504. The outsole portions 503 and 504 typically each have an upper surface that is attached to the midsole 502 and a lower surface that functions as a tread. The tread may include grooves to provide flexibility. In some cases, the outsole portions 503 and 504 may be attached to the midsole 502 with an adhesive. The outsole may be formed from one or more polymer materials such as natural or synthetic rubber, a polyether-block-amide (PEBA) block copolymer thermoplastic elastomer, a copolyester thermoplastic elastomer, a thermoplastic or thermoset polyurethane, or an ethylene vinyl acetate. In some cases, the outsole may be formed from one or more bio-based polymer materials.

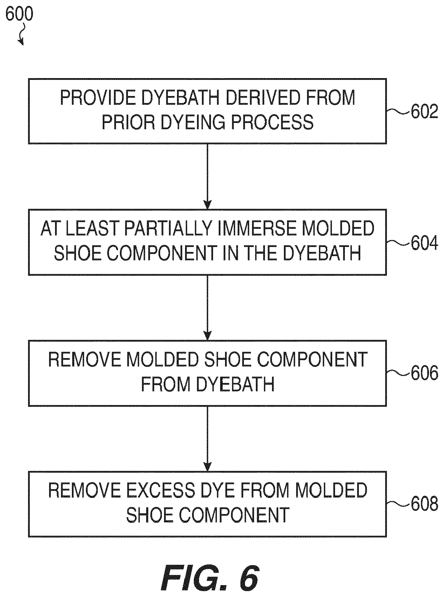

FIG. 6 shows a flow diagram of a method for dyeing a molded shoe component. The method 600 includes an operation 602 of providing a dyebath derived from a prior dyeing process. In some embodiments, the dyebath is derived from a waste stream of a textile dyeing process. Therefore, the overall amount of waste fluids can be reduced as compared to the amount of waste fluids that would have been generated using two separate dyebaths.

The dyebath may include any suitable dye that is suitable for both dyeing the article dyed in the prior dyeing process and the molded shoe component. For example, dyes suitable for dyeing textiles formed wholly or in part from thermoplastic fibers may also be suitable for dyeing molded shoe components formed from a similar thermoplastic material. In some examples, the dyebath is derived from a process for dyeing a nylon fabric and may be used to dye molded foam shoe components that are formed from a polymer that comprises amide groups, such as a polyamide polymer or a polymer that comprises polyamide blocks (e.g., PEBA). In some cases, the dyebath includes a disperse dye. Disperse dyes are suitable for dyeing thermoplastic fibers such as polyester fibers, nylon (polyamide) fibers, cellulose acetate fibers, triacetate fibers, acrylic fibers, and the like. The dyebath may also include water and a surfactant that aids in dispersing the dye in the aqueous solution.

The process 600 also includes an operation 604 of at least partially immersing a molded shoe component in the dyebath to dye at least a portion of the molded shoe component. The portion of the molded shoe component that is dyed may also be referred to herein as a dyed portion. In some cases, the molded shoe component is completely immersed in the dyebath, and the dye enters the molded shoe component from the top, bottom, and side surfaces of the molded shoe component. In other cases, the molded shoe component is partially immersed in the dyebath, such as when only one end or side of the molded shoe component is to be dyed. In some cases, the molded shoe component may be transported into and through the dyebath using a conveyor.

In some embodiments, the dye may diffuse into the polymer material of the molded shoe component during the operation 604. When the molded shoe component is a molded foam shoe component that includes open foam cells at the surface, a portion of the dyebath may enter these open foam cells, thereby enhancing the update of dye by the molded foam shoe component. The operation 604 may take place at a temperature above ambient temperature to enhance diffusion of the dye into the polymer material. When the dyebath derives from a process for dyeing a textile formed wholly or in part from thermoplastic fibers and the molded shoe component is formed from a similar thermoplastic material, suitable temperatures for the operation 604 may be similar to suitable temperatures for the textile dyeing process. Other process conditions may also be similar. For example, when the textile dyeing process includes multiple stages, such as an adsorption stage, a diffusion stage, and a clearing phase, the operation 604 may also include multiple stages.

The process 600 further includes an operation 606 of removing the molded shoe component from the dyebath. When the molded shoe component is transported into and through the dyebath on a conveyor, the conveyor may also be used to remove the molded shoe component from the dyebath. However, this example is not limiting, and other types of equipment may be used to remove the molded shoe component from the dyebath.

The process 600 further includes an operation 608 of removing excess dye from the molded shoe component after removing the molded shoe component from the dyebath. In some examples, the operation 608 may include rinsing the molded shoe component to remove excess dye from the surface region of the shoe component. Alternately or additionally, the operation 608 may include wiping or blowing away excess dye from the surface of the shoe component.

The process 600 may also include additional operations. For example, the process may include an operation of drying the molded shoe component after the operation 608. Furthermore, the process 600 may include an operation of applying a protective coating after an operation of drying the molded shoe component. Suitable protective coatings include, but are not limited to, water-based epoxy coatings and polyurethane coatings. As one example, a water-based epoxy coating may be suitable for use with molded shoe components formed from a PEBA thermoplastic elastomer material. As another example, a polyurethane coating coating may be suitable for use with molded shoe components formed from a thermoplastic polyurethane elastomer material. The protective coating may be substantially transparent so that it does not interfere with the visual contrast produced by the surface texture of the shoe component.

The foregoing description, for purposes of explanation, used specific nomenclature to provide a thorough understanding of the described embodiments. However, it will be apparent to one skilled in the art that the specific details are not required in order to practice the described embodiments. Thus, the foregoing descriptions of the specific embodiments described herein are presented for purposes of illustration and description. They are not intended to be exhaustive or to limit the embodiments to the precise forms disclosed. It will be apparent to one of ordinary skill in the art that many modifications and variations are possible in view of the above teachings.

### ADDITIONAL NUMBERED STATEMENTS

1. A method, comprising:
   providing a dyebath derived from a prior dyeing process;
   at least partially immersing a molded shoe component in the dyebath to dye at least a portion of the molded shoe component;
   removing the molded shoe component from the dyebath; and
   removing excess dye from the molded shoe component after removing the molded shoe component from the dyebath.
2. The method of statement 1, wherein the molded shoe component is a molded foam shoe component.
3. The method of statement 2, wherein the molded foam shoe component comprises:
   a core region having a first average porosity level;
   a surface region at least partially surrounding the core region and having a second average porosity level that is less than the first average porosity level; and
   the dyed portion of the molded foam shoe component extends through at least a portion of the surface region.
4. The method of statement 2, further comprising applying a transparent coating to a surface of the molded foam shoe component.
5. The method of statement 2, wherein:
   the molded foam shoe component comprises a bio-based polyether-block-amide block copolymer thermoplastic elastomer; and
   the dyebath comprises a disperse dye.
6. The method of statement 5, further comprising applying water-based epoxy coating to a surface of the molded foam shoe component.
7. The method of statement 1, wherein the prior dyeing process is a textile dyeing process.
8. A molded foam shoe component comprising:
   a core region having a first average porosity level;
   a surface region extending along a surface of the molded foam shoe component and having a second average porosity level that is less than the first average porosity level; and
   a dyed portion that extends from the surface and through at least a portion of the surface region.
9. The molded foam shoe component of statement 8, wherein:
   the dyed portion extends through the surface region and into the core region; and
   the dyed portion does not extend through the core region.
10. The molded foam shoe component of statement 8, wherein the molded foam shoe component is formed from a bio-based polyether-block-amide block copolymer thermoplastic elastomer.
11. The molded foam shoe component of statement 8, wherein the surface region comprises elongated surface features that are elevated with respect to adjacent portions of the surface region.
12. The molded foam shoe component of statement 11, wherein at least some of the adjacent portions of the surface region have a cellular structure comprising open cells.
13. The molded foam shoe component of statement 12, wherein the elongated surface features and the cellular structure together impart visual contrast to the surface of the molded foam shoe component.
14. The molded foam shoe component of statement 8, wherein the surface is a side surface of the molded foam shoe component.
15. A shoe comprising:
   an upper portion; and
   a sole attached to the upper portion and comprising a molded foam shoe component including a dyed portion.
16. The shoe of statement 15, wherein the molded foam shoe component is an injection molded foam shoe component.
17. The shoe of statement 16, wherein the molded foam shoe component is formed from a bio-based thermoplastic elastomer.
18. The shoe of statement 17, wherein the bio-based thermoplastic elastomer is a polyether-block-amide (PEBA) block copolymer thermoplastic elastomer.
19. The shoe of statement 15, wherein:
   the molded foam shoe component is a midsole of the shoe; and
   the shoe further comprises an outsole.
20. The shoe of statement 15, wherein the upper portion of the shoe comprises a bio-based knit textile.

## Claims

1. A method, comprising:
providing a dyebath derived from a prior dyeing process;
at least partially immersing a molded shoe component in the dyebath to dye at least a portion of the molded shoe component;
removing the molded shoe component from the dyebath; and
removing excess dye from the molded shoe component after removing the molded shoe component from the dyebath.

2. The method of claim 1, wherein the molded shoe component is a molded foam shoe component.

3. The method of claim 2, wherein the molded foam shoe component comprises:
a core region having a first average porosity level;
a surface region at least partially surrounding the core region and having a second average porosity level that is less than the first average porosity level; and
the dyed portion of the molded foam shoe component extends through at least a portion of the surface region.

4. The method of claim 2 or claim 3, wherein:
the molded foam shoe component comprises a bio-based polyether-block-amide block copolymer thermoplastic elastomer; and
the dyebath comprises a disperse dye.

5. The method of any of claims 1 to 4, wherein the prior dyeing process is a textile dyeing process.

6. A molded foam shoe component comprising:
a core region having a first average porosity level;
a surface region extending along a surface of the molded foam shoe component and having a second average porosity level that is less than the first average porosity level; and
a dyed portion that extends from the surface and through at least a portion of the surface region.

7. The molded foam shoe component of claim 6, wherein:
the dyed portion extends through the surface region and into the core region; and
the dyed portion does not extend through the core region.

8. The molded foam shoe component of claim 6 or claim 7, wherein the molded foam shoe component is formed from a bio-based polyether-block-amide block copolymer thermoplastic elastomer.

9. The molded foam shoe component of any of claims 6 to 8, wherein the surface region comprises elongated surface features that are elevated with respect to adjacent portions of the surface region.

10. The molded foam shoe component of claim 9, wherein at least some of the adjacent portions of the surface region have a cellular structure comprising open cells.

11. The molded foam shoe component of claim 10, wherein the elongated surface features and the cellular structure together impart visual contrast to the surface of the molded foam shoe component.

12. The molded foam shoe component of any of claims 6 to 11, wherein the surface is a side surface of the molded foam shoe component.

13. A shoe comprising:
an upper portion; and
a sole attached to the upper portion and comprising the molded foam shoe component of any of claims 6 to 12.

14. The shoe of claim 13, wherein the molded foam shoe component is an injection molded foam shoe component.

15. The shoe of claim 13, wherein:
the molded foam shoe component is a midsole of the shoe;
the shoe further comprises an outsole; and
the upper portion of the shoe comprises a bio-based textile.
